(19) Europäisches Patentamt

European Patent Office

Office européen des brevets

(11) **EP 0 927 969 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
***G07B 17/00*** *(2006.01)*

(21) Anmeldenummer: **98250407.8**

(22) Anmeldetag: **23.11.1998**

(54) **Frankiermaschine mit einer Chipkarten-Schreib/Leseeinheit**

Franking machine with chipcard read/write unit

Machine à affranchir avec dispositif de lecture/écriture de cartes à puce

(84) Benannte Vertragsstaaten:
**CH DE FR GB IT LI**

(30) Priorität: **15.12.1997 DE 19757648**

(43) Veröffentlichungstag der Anmeldung:
**07.07.1999 Patentblatt 1999/27**

(73) Patentinhaber: **Francotyp-Postalia GmbH**
**16547 Birkenwerder (DE)**

(72) Erfinder:
• **Bornemann, Ludger**
**10777 Berlin (DE)**
• **Günther, Stephan**
**13465 Berlin (DE)**
• **Kopanski, Wilfried**
**13465 Berlin (DE)**
• **Zarges, Olav A.**
**13353 Berlin (DE)**

(56) Entgegenhaltungen:
**EP-A- 0 762 338          EP-A- 0 789 333**
**US-A- 4 802 218          US-A- 5 490 077**

## Beschreibung

Die Erfindung betrifft eine Frankiermaschine mit einer Chipkarten-Schreib/Leseeinheit, gemäß der im Oberbegriff des Anspruchs 1 angegebenen Art, welche mit einer zugehörigen Steuerung ausgestattet ist, die eine Frankiermaschinen-interne Initialisierung von Chipkarten gestattet, um in Verbindung mit geeignet initialisierten Chipkarten die Funktionseingabe und die Verwaltung von zu buchenden Kostenstellendaten zu vereinfachen.

Die Verwaltung von abrechnungsspezifischen Daten über Kostenstellen ist bei Frankiermaschinen schon des längeren bekannt. Zweck der Kostenstellen ist es, Transparenz in die Abrechnung von Geräten zu bringen, die von unterschiedlichen Benutzern gebraucht werden. Unter dem Begriff Kostenstelle ist ein für die abteilungsweise Abrechnung bzw. Buchung von Benutzungshandlungen vorgesehener nichtflüchtiger Speicherbereich in der Frankiermaschine zu verstehen. Jeder Kostenstelle ist eine Nummer und/oder Bezeichnung zugeordnet; über welche der vorgenannte Speicherbereich angewählt wird.

Moderne Frankiermaschinen, wie beispielsweise die aus US 4.746.234 bekannte Thermotransfer-Frankiermaschine, setzen vollelektronische digitale Druckvorrichtungen ein. Damit ist es prinzipiell möglich, beliebige Texte und Sonderzeichen im Frankierstempeldruckbereich und ein beliebiges oder ein einer Kostenstelle zugeordnetes Werbeklischee zu drucken. Beispielsweise die Frankiermaschine T1000 der Anmelderin hat einen Mikroprozessor, welcher von einem gesicherten Gehäuse umgeben ist, welches eine Öffnung für die Zuführung eines Briefes aufweist. Bei einer Briefzuführung übermittelt ein mechanischer Briefsensor (Mikroschalter) ein Druckanforderungssignal an den Mikroprozessor. Der Frankierabdruck beinhaltet eine zuvor eingegebene und gespeicherte postalische Information zur Beförderung des Briefes.

Es ist weiterhin bekannt, auch kostenstellenspezifische Daten auf Chipkarten zu hinterlegen, um so die benutzerspezifischen Informationen mobil vorzuhalten und einen bewußten Mißbrauch anderer Kostenstellen zu vermeiden. In US 5,490,077 wurde bereits für die oben genannte Thermotransfer-Frankiermaschine eine Dateneingabemöglichkeit mittels Chipkarten vorgeschlagen. Eine der Chipkarten lädt neue Daten in die Frankiermaschine und ein Satz an weiteren Chipkarten gestattet durch das Stecken einer Chipkarte eine Einstellung entsprechend eingespeicherter Daten vorzunehmen. Das Datenladen und die Einstellung der Frankiermaschine sollen damit bequemer und schneller als per Tastatureingabe möglich sein. Die Tastatur der Frankiermaschine bleibt klein und übersichtlich, weil keine zusätzlichen Tasten erforderlich sind, um zusätzliche Funktionen zu laden oder einzustellen. Auf der Rückseite der Frankiermaschine befindet sich ein Einsteckschlitz einer Chipkarten-Schreib/Leseeinheit, in welchen die jeweilige Chipkarte vom Kunden innerhalb eines Zeitfensters eingesteckt werden soll. Wegen des mangelnden unmittelbaren Sichtkontaktes gelingt es einem ungeübten Benutzer nicht immer sofort hintereinander die erforderlichen Chipkarten einzustecken, was dann zu unerwünschten Verzögerungen führt. Gut zugänglich ist der Einsteckschlitz einer Chipkarten-Schreib/Leseeinheit nur dann, wenn der Benutzer sich über die Maschine beugt. Bei größeren Maschinen wachsen die Probleme, um den Blickkontakt herzustellen. Oft verfügt der Benutzer über eine Vielzahl an weiteren einsteckbaren Chipkarten. Eine Chipkartenart, beispielsweise Telefonkarten, Kreditkarten u.a., werden von der Frankiermaschine zwar aufgenommen aber nicht akzeptiert. Ohne Sichtkontakt ist der Irrtum aber nicht sofort offensichtlich. Die Frankiermaschine arbeitet nur mit relativ teuren Chipkarten, welche selbst mit einem Mikroprozessor ausgestattet sind und somit in der Lage sind zu prüfen, ob die Frankiermaschine ein gültiges Datenwort zur Chipkarte übermittelt, bevor eine Antwort an die Frankiermaschine gesendet wird. Erfolgt aber keine Antwort bzw. Benutzeridentifikation, wird dies als Fehler in der Frankiermaschine registriert und angezeigt, bevor eine Aufforderung in der Anzeige angezeigt wird, die Chipkarte zu entfernen. Eine irrtümlich eingesteckte Telefonkarte als Betrugsversuch zu registrieren, erscheint aber als eine unangemessen hohe Forderung.

In der DE 196 05 015 C1 ist bereits eine Ausführung für eine Druckvorrichtung (JetMail® ) vorgeschlagen worden, die bei einem nichtwaagerechten annähernd vertikalen Brieftransport einen Frankierdruck mittels einem hinter einer Führungsplatte in einer Ausnehmung stationär angeordneten Tintenstrahldruckkopf durchführt. Ein Drucksensor ist zur Briefanfangserkennung kurz vor der Ausnehmung für den Tintenstrahldruckkopf angeordnet und wirkt mit einem Inkrementalgeber zusammen. Durch die auf dem Transportband angeordneten Andruckelemente ist der Brieftransport schlupffrei und das während des Transportes abgeleitete Inkrementalgebersignal beeinflußt die Druckbildqualität positiv. Jedoch müßte bei einer solchen höhere Abmaße aufweisenden Frankiermaschine, eine Chipkarten-Schreib/Leseeinheit so angeordnet und betrieben werden, daß mit sequentiell einsteckbaren Chipkarten problemlos gearbeitet werden kann.

Die Chipkarten werden üblicherweise vom Chipkartenhersteller und Frankiermaschinenhersteller initialisiert. Es ist jedoch für den Frankiermaschinenhersteller aufwendig, dabei die speziellen Kundenwünsche zu berücksichtigen. Für den Benutzer der Frankiermaschine besteht die Notwendigkeit seine Kundenwünsche dem Hersteller mitzuteilen, welche eine spezielle Eingabefunktion per Chipkarte betreffen. Bis der Benutzer eine entsprechend initialisierte Chipkarte zugesandt bekommt, kann die Frankiermaschine weiterhin nur per Frankiermaschinentastatur für die spezielle Eingabefunktion eingestellt werden.

Als alternativer Weg zur Lösung des weiteren Problems, wonach der auf einer Chipkarte verfügbare Speicherplatz nur begrenzt vorhanden ist, wird in der US 4 802 218 vorgeschlagen, mehrere Chipkarten gleichzeitig zu verwenden, die in eine Vielzahl an Schreib-Leseeinheiten eingesteckt sind. Neben einer USER-Chipkarte für die Guthabennachladung und Abrechnung, wobei der zu druckende Portogebührenwert vom Guthaben subtrahiert wird, ist auch eine Masterkarte und eine weitere Rate-Chipkarte mit einer gespeicherten Portogebührentabelle gleichzeitig eingesteckt. Durch den Zugriff auf eine Portogebührentabelle, kann entsprechend dem eingegebenen Gewicht und Versandziel ein Portogebührenwert ermittelt werden, ohne eine ganze Tabelle in die Maschine zu laden. Da aber zu jeder Chipkarte je eine SchreibLeseeinheit erforderlich ist, wird das Gerät zu groß und teuer. Außerdem ist ein separates Wiederauflade-Terminal erforderlich, um das Guthaben in der USER-Chipkarte wieder aufzufüllen, wobei zu dieser Wiederauflade-Funktion eine Masterkarte berechtigt. Eine Super-Visor-Karte hat Zugriff auf alle Masterkarten. Verschiedene Sicherheitslevel werden durch zugehörige Schlüsselcodes erschlossen. Ein solches System mit mehreren Slots für Chipkarten ist insgesamt sehr aufwendig.

Aus der DE 195 16 429 ist ein Verfahren für eine Zugangsautorisierung zu einer gesicherten Einrichtung mittels kartenförmiger Masterelemente bekannt, welche kartenförmige Autorisierungselemente als gültig erkennbar machen. Derartig gültig gemachte kartenförmige Autorisierungselemente erlauben später den Zugang zu der gesicherten Einrichtung, ohne daß der Benutzer im Besitz des Masterelementes ist. Auch können weitere Autorisierungselemente als gültig bestätigt werden. Der Bestätigungsvorgang schließt einen Informationsaustausch zwischen einem Masterelement höheren Ranges und einem Autorisierungselement bzw. Masterelement niedrigeren Ranges und einem elektronischem Schloß, der gesicherten Einrichtung, ein. Spezielle Kundenwünsche können dabei jedoch nicht berücksichtigt werden, denn alle so erzeugten Karten sind technisch und funktionell gleich und dienen lediglich der Verteilung von Zugangsberechtigungen einer hierarchisch gegliederten Verwaltung von gesicherten Einrichtungen.

Der Erfindung liegt die Aufgabe zugrunde, einerseits eine gut zugängliche Chipkarten-Schreib/Leseeinheit, die hinter der Führungsplatte angeordnet ist, und eine zugehörige Steuerung in der Frankiermaschine zu schaffen, die o.g. Probleme vermeidet, indem dem Benutzer eine beschränkte Möglichkeit zur internen Initialisierung eines abgeleiteten Satzes an Chipkarten eingeräumt wird. Das Chipkarten/Frankiermaschinen-System soll andererseits beliebig erweiterbar bzw. vom Benutzer modifizierbar ausgeführt werden. Eine andere eingesteckte Chipkartenart sollte von der Frankiermaschine erkannt und entsprechend ausgewertet werden. Die Frankiermaschine soll mit einer möglichst preiswerten Chipkartenart betrieben werden. Die Vorteile der eindeutigen, einfachen und fälschungssicheren Kostenstellenauswahl über Chipkarte sollen unter Vermeidung der Benutzung von nennenswertem Speicherplatz auf derselben angewendet werden. Neben der Kostenstellenfreigabe soll eine Freigabe vorbestimmter weiterer Funktionen lediglich durch Einstecken einer Chipkarte in eine Chipkarten-Schreib/Leseeinheit erreicht werden.

Die Aufgabe wird mit den Merkmalen des Anspruchs 1 gelöst.

Chipkarten haben oft nur einen stark begrenzten Speicherplatz. Das gilt insbesondere für die preiswerten Chipkarten. So sind Speicherkarten üblicherweise nur mit einigen hundert Bit's an Speichergröße ausgeführt. Dieser Speicherplatz reicht nicht aus, um kostenstellenspezifische Daten im gesamten Umfang aufzunehmen. Erfindungsgemäß wird mit Hilfe einer fortlaufenden Nummer in jeder Chipkarte, die zusammen mit der Frankiermaschine in Verwendung kommt, das gesamte Kostenstellen-Handling innerhalb der Frankiermaschine gesteuert. Innerhalb des Programmspeichers der Frankiermaschine ist eine erste Anwendung gespeichert, die bestimmten Chipkartennummern bestimmte Privilegien (Hierarchien) und Kostenstellennummern zuordnet. Eine zusammen mit der Frankiermaschine ausgelieferte erste Chipkarte wird als Master-Karte bezeichnet. Letztere ist vom Hersteller personalisiert für die Frankiermaschine, um diese in Betrieb zu nehmen. Weitere beigefügte Chipkarten werden nacholgend als Folgekarten bezeichnet. Die Chipkartennummer der Folgekarten ist vor Ihrer Initialisierung noch unvollständig. Deren Initialisierung kann mittels der Frankiermaschine vom Benutzer durchgeführt werden. Unter Initialisierung wird nachfolgend das Vervollständigen einer Chipkartennummer, das Einschreiben in einen Teil eines Kennungsstrings in einem Speicher der Chipkarte, das Zuordnen und Speichern der Zuordnung der Chipkartennummer zu einer Viehlzahl von Anwendungsfunktionen oder zu mindestens einer Anwendungsfunktion in einem nichtflüchtigen Speicher der Frankiermaschine verstanden. Unter einer top-down-Initialisierung wird nachfolgend das Ableiten von Chipkartennummern und deren Zuordnung in der Frankiermaschine zu einer eingeschränkten Anzahl von Anwendungsfunktionen oder zu mindestens einer Anwendungsfunktion verstanden. Zur Ableitung von Chipkarten, die einen eingeschränkten Funktionsumfang ermöglichen, wird unter Verwendung der Tastatur und Anzeige und mit Hilfe des Mikroprozessors und der zugehörigen nichtflüchtigen Speicher innerhalb der Frankiermaschine eine Tabelle mit einer speziellen hierarchischen Struktur erstellt, indem die vorgespeicherte Struktur entsprechend modifiziert wird. Die Tabelle weist im Ergebnis der top-down-Initialisierung die spezielle hierarchische Struktur auf, die durch die Frankiermaschinen-interne Initialisierung mit Schaffung einer Zuordnung zu Anwendungsfunktionen in der Frankiermaschine gegeben ist, die im nichtflüchtigen Speicher der Frankiermaschine nichtflüchtig gespeichert vorliegt. Dabei entsteht eine Baumstruktur in der Hierarchie für die von der erfindungsgemäßen ersten Chipkarte abgeleiteten zweiten Chipkarte und weiteren Folgekarten, insbesondere speziellen Funktions- bzw. Funktionenanwendungskarten. Solchermaßen initialisierte Chipkarten werden lediglich gesteckt und gestatten dann den Betrieb der Frankiermaschine für einen definierten Funktionsumfang.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a,     Details der Speicherbereiche der Chipkarte,

Figur 1b,     Baumstruktur der Hierarchie für die von der Master-Chipkarte abgeleiteten Funktionenanwendungskarten,

Figur 2,     Blockschaltbild zur Einstellung der Funktion der Frankiermaschine und zur Ansteuerung der Druckeinrichtung,

Figur 3,     Perspektivische Ansicht der Frankiermaschine von hinten,

Figur 4,     Ablaufplan für eine Steuerung durch den Mikroprozessor bei der Dateneingabe mittels einer Chipkarte,

Figur 5,     Ablaufplan für eine Steuerung durch den Mikroprozessor bei der Intialisierung der von der ersten Chipkarte abgeleiteten zweiten Chipkarten,

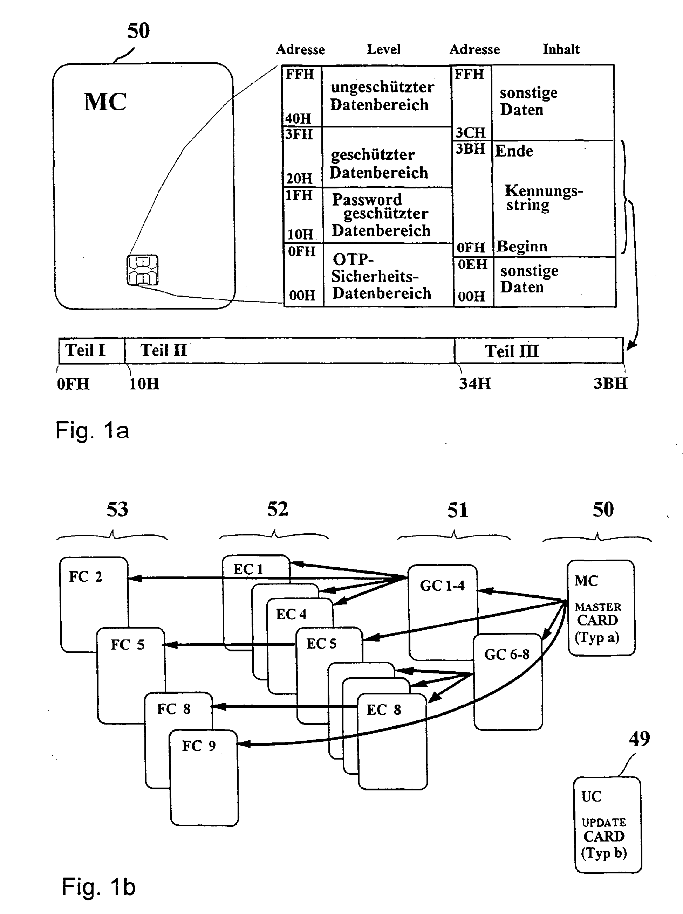

In der Figur 1a ist eine Chipkarte mit Kontaktfeld dargestellt. Unter letzterem befindet sich bekanntlich der Speicherchip, dessen Speicherbereich in ungeschützte und geschützte Bereiche aufgeteilt ist. Ein Kennungsstring ist im geschützten Bereich gespeichert. Der geschützte Bereich ist auf verschiedene Weise erzeugt worden. Ein erster Teil des Kennungsstrings ist nur für den Chipkartenhersteller beschreibbar. Ein zweiter Teil des Kennungsstrings ist nur für den Frankiermaschinenhersteller beschreibbar. Für den Kunden ist ein geschützter Datenbereich im dritten Teil des Kennungsstrings vorgesehen. Nach einer vorbestimmten, vorzugsweise menügesteuerten, Eingabe über die Frankiermaschinentastatur erlangt der Benutzer Zugriff auf diesen Bereich.

Durch die Frankiermaschinen-interne Initialisierung mit Schaffung einer Zuordnung zu Anwendungsfunktionen in der Frankiermaschine und mit einem benutzerauthorisierten Einschreiben im dritten Teil des Kennungsstrings im Speicherchip der Chipkarte entsteht für eine Gruppe von Chipkarten eine hierarchische Struktur, die - wie in der Figur 1b gezeigt wird - ausgehend von einer ersten Chipkarte vom Frankiermaschinenbenutzer beliebig erweiterbar und änderbar ist. Die erste Chipkarte 50 steht auf der obersten Hierarchiestufe und ist die personalisierte Master-Karte. Die in der Gruppe 51 bezeichneten zweiten Chipkarten stehen auf der ersten Hierarchiestufe, die in der Gruppe 52 bezeichneten weiteren Chipkarten stehen auf der zweiten Hierarchiestufe, die in der Gruppe 53 bezeichneten nachfolgenden Chipkarten stehen auf der dritten Hierarchiestufe, u.s.w., wobei solche Karten aus diesen Gruppen von Chipkarten auch als Folge-Karten bezeichnet werden, für welche stufenweise die Funktionenanwendungsberechtigung in wählbarer Weise limitiert und tabellarisch gespeichert ist. Die erste Karte 50 ist also die Master-Karte MC (Hierarchie 0), mit der sich alle Initialisierungen und Änderungen vornehmen lassen. Beispielsweise existieren im ersten Ast weitere 5 Karten mit den fortlaufenden Nummern 002 bis 006 für vier der Kostenstellen. Es wird die zweite Karte 51 für den Zugriff auf die Kostenstellen 1 bis 4 als Gruppen-Karte GC 1-4 autorisiert (Hierarchie 1). Die weiteren Folge-Karten 52 sind jeweils nur für eine einzige Kostenstelle als Einzelkarte EC 1, EC 3, EC 4 autorisiert (Hierarchie 2). Die zweite Karte 51 kann Änderungen in den Folge-Karten 52, d.h. in den Einzelkarten EC1, EC 3, EC 4 im Rahmen der eigenen Autorisierung gestatten. Die vorgenommene Änderung der Kostenstelle, nämlich KST-Nummer 1, 3 und 4 betrifft eine Änderung in der Zuordnung von Anwendungsfunktionen. Eine solche kann (top-down) mit Hilfe der Gruppenkarte (51) GC 1-4, jedoch nicht (bottom up) für die erste Karte 50 MC vorgenommen werden. Mit der Gruppenkarte (51) GC 1-4 kann auf eine der Kostenstellen, nämlich der Kostenstellen-Nummern 1 bis 4, der verfrankierte Portowert gebucht werden. Eine mittels der Gruppenkarte GC 1-4 Frankiermaschinen-intern initialisierte einzelne Funktionskarte FC 2 gestattet deren Besitzer nur eine informationelle Abfrage der Buchungen unter der Kostenstellen-Nummer 2 und nur Null-Wert-Frankierungen mit der Frankiermaschine vorzunehmen.

Weiterhin ist es in einem zweiten Ast vorgesehen, unter Auslassung der Erzeugung einer Gruppenkarte eine Einzelkarte EC 5 und eine Funktionskarte FC 5 zu erzeugen, welche beide der fünften Kostenstelle zugeordnet sind. Eine mittels der Einzelkarte EC 5 Frankiermaschinen-intern initialisierte einzelne Funktionskarte FC 5 gestattet deren Besitzer beispielweise nur eine informationelle Abfrage der Buchungen unter der Kostenstellen-Nummer 5 und Null-Wert-Frankierungen mit der Frankiermaschine vorzunehmen. Auch kann in einem Ast unter Auslassung weiterer Hierarchiestufen nur eine einer untersten Hierarchiestufe zugeordnete Folge-Karte FC 9 Frankiermaschinen-intern initialisiert werden. Die Karten der untersten Hierarchiestufe sind im Funktionenanwendungsumfang am weitesten beschränkt.

Ebenso kann in einem dritten Ast ohne Auslassung von Hierarchiestufen stufenweise eine Anzahl von zu jeder Hierarchiestufe zugeordneten Folge-Karten Frankiermaschinen-intern initialisiert werden, d.h. eine Gruppenkarte GC 6-8 als Folge-Karte 51 in der ersten Hierarchiestufe, eine Einzelkarte EC 8 als Folge-Karte 52 in der zweiten Hierarchiestufe und eine Funktionskarte FC 8 als Folge-Karte 53 in der dritten Hierarchiestufe.

Der Schutz der Karten vor Auslesen der fortlaufenden Nummer ist in bekannter Weise durch PIN oder andere Sicherheitsalgorithmen möglich. Bei Verlust der Master-Karte ist nur über eine Information des Frankiermaschinenherstellers (und entsprechenden Nachweis der Authentizität) ein Ersatz möglich. Das Sperren bzw. die Freigabe aller anderen Karten ist durch die Master-Karte möglich. Eine weitere Sicherheit bei der Frankiermaschinen-internen Initialisierung des Systems mit Hilfe der Master-Karte ist dadurch möglich, daß nur physisch vorhandene Karten initialisierbar sind, dadurch werden die geheimen fortlaufenden Nummern der Karten geschützt. Bei einem Folgekarten-Verlust kann ein Sperren des entsprechenden Speicherbereiches in der Frankiermaschine erfolgen.

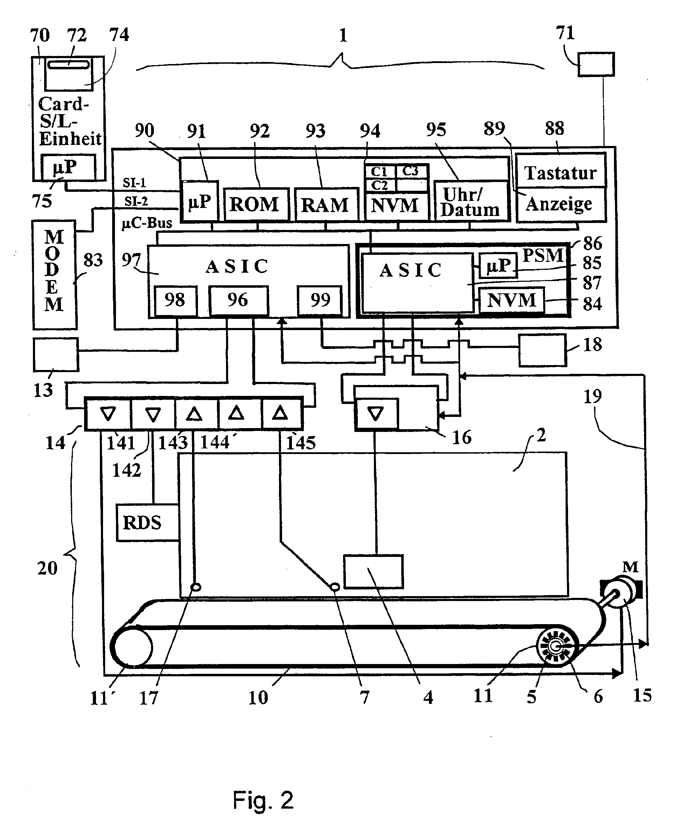

Die Figur 2 zeigt ein Blockschaltbild zur Einstellung der Funktion der Frankiermaschine und zur Ansteuerung der Druckvorrichtung 20 mit einer Chipkarten-Schreib/Lese-Einheit 70 und mit einer Steuereinrichtung 1 der Frankiermaschine. Die Steuereinrichtung 1 bildet das eigentliche Meter und umfaßt ein erstes Steuergerät 90, eine Tastatur 88 und eine Anzeigeeinheit 89 sowie einen ersten und zweiten anwendungsspezifischen Schaltkreis ASIC 87 und 97. Das erste Steuergerät 90 enthält einen ersten Mikroprozessor 91 und an sich bekannte Speichermittel 92, 93, 94 sowie einen Uhren/Datumsschaltkreis 95. Im nichtflüchtigen Speicher 94 sind Bereiche zur Speicherung der Abrechnungsdaten vorgesehen, die den Kostenstellen zugeordnet sind.

Der erste anwendungsspezifische Schaltkreis ASIC 87 bildet zusammen mit einem zweiten Mikroprozessor 85 und einem nichtflüchtigen Speicher 84 ein postalisches Sicherheitsmittel PSM 86. Das postalische Sicherheitsmittel PSM 86 wird von einem gesicherten Gehäuse umschlossen und weist eine schnelle serielle Schnittstelle zur Druckersteuerung 16 auf. Vor jedem Frankierabdruck erfolgt eine hardwaremäßige Abrechnung im ersten anwendungsspezifischen Schaltkreis ASIC 87. Die Abrechnung erfolgt unabhängig von Kostenstellen. Der zweiten Mikroprozessor 85 enthält einen - nicht gezeigten - integrierten Festwertspeicher int.ROM mit dem speziellen Anwendungsprogramm, was für die Frankiermaschine von der Postbehörde bzw. vom jeweiligen Postbeförderer zugelassen ist. Das postalische Sicherheitsmittel PSM 86 kann so ausgeführt sein, wie in der europäischen Anmeldung EP 789 333 A3 näher beschrieben wurde.

Beide vorgenannte ASIC's sind über den parallelen µC-Bus mindestens mit dem Steuergerät 90 und der Anzeigeeinheit 89 verbunden. Der erste Mikroprozessor 91 weist vorzugsweise Anschlüsse für die Tastatur 88, eine serielle Schnittstelle SI-1 für den Anschluß der Chipkarten-Schreib/Lese-Einheit 70 und eine serielle Schnittstelle SI-2 für den optionalen Anschluß eines MODEMs auf. Mittels des MODEMs kann das im nichtflüchtigen Speicher 84 des postalischen Sicherheitsmittels PSM 86 gespeicherte Guthaben erhöht werden.

Es ist vorgesehen, daß der zweite ASIC 97 eine serielle Schnittstellenschaltung 98 zu einem im Poststrom vorschalteten Gerät 13, eine serielle Schnittstellenschaltung 96 zur Druckvorrichtung 20 und eine serielle Schnittstellenschaltung 99 zu einem der Druckvorrichtung 20 im Poststrom nachgeschalteten Gerät 18 aufweist.

Der nicht vorveröffentlichten deutschen Anmeldung 197 11 997.2 ist eine Ausführungsvariante für die Peripherieschnittstelle entnehmbar, welche für mehrere Peripheriegeräte (Stationen) geeignet ist. Sie trägt den Titel: Anordnung zur Kommunikation zwischen einer Basisstation und weiteren Stationen einer Postbearbeitungsmaschine und zu deren Notabschaltung.

Die Schnittstellenschaltung 96 gekoppelt mit der in der Maschinenbasis befindlichen Schnittstellenschaltung 14 stellt mindestens eine Verbindung zu den Sensoren 6, 7, 17 und zu den Aktoren, beispielsweise zum Antriebsmotor 15 für die Walze 11 und zu einer Reinigungs- und Dichtstation RDS für den Tintenstrahldruckkopf 4, sowie zum Tintenstrahldruckkopf 4 der Maschinenbasis her. Die prinzipielle Anordnung und das Zusammenspiel zwischen Tintenstrahldruckkopf und der RDS sind der nicht vorveröffentlichten deutschen Anmeldung 197 26 642.8 entnehmbar, mit dem Titel: Anordnung zur Positionierung eines Tintenstrahldruckkopfes und einer Reinigungs- und Dichtvorrichtung.

Einer der in der Führungsplatte 2 angeordneten Sensoren 7, 17 ist der Sensor 17 und dient zur Vorbereitung der Druckauslösung beim Brieftransport. Der Sensor 7 dient zur Briefanfangserkennung zwecks Druckauslösung beim Brieftransport. Die Transporteinrichtung besteht aus einem Transportband 10 und zwei Walzen 11,11'. Eine der Walzen ist die mit einem Motor 15 ausgestattete Antriebswalze 11, eine andere ist die mitlaufende Spannwalze 11'. Vorzugsweise ist die Antriebswalze 11 als Zahnwalze ausgeführt, entsprechend ist auch das Transportband 10 als Zahnriemen ausgeführt, was die eindeutige Kraftübertragung sichert. Ein Encoder 5, 6 ist mit einer der Walzen 11, 11' gekoppelt. Vorzugsweise sitzt die Antriebswalze 11 mit einem Inkrementalgeber 5 fest auf einer Achse. Der Inkrementalgeber 5 ist beispielsweise als Schlitzscheibe ausgeführt, die mit einer Lichtschranke 6 zusammen wirkt.

Es ist vorgesehen, daß die einzelnen Druckelemente des Druckkopfes innerhalb seines Gehäuses mit einer Druckkopfelektronik verbunden sind und daß der Druckkopf für einen rein elektronischen Druck ansteuerbar ist. Die Drucksteuerung erfolgt auf Basis der Wegsteuerung, wobei der gewählte Stempelversatz berücksichtigt wird, welcher per Tastatur 88 oder bei Bedarf per Chipkarte eingegeben und im Speicher NVM 94 nichtflüchtig gespeichert wird. Ein geplanter Abdruck ergibt sich somit aus Stempelversatz (ohne Drucken), dem Frankierdruckbild und gegebenfalls weiteren Druckbildern für Werbeklischee, Versandinformationen (Wahldrucke) und zusätzlichen editierbaren Mitteilungen.

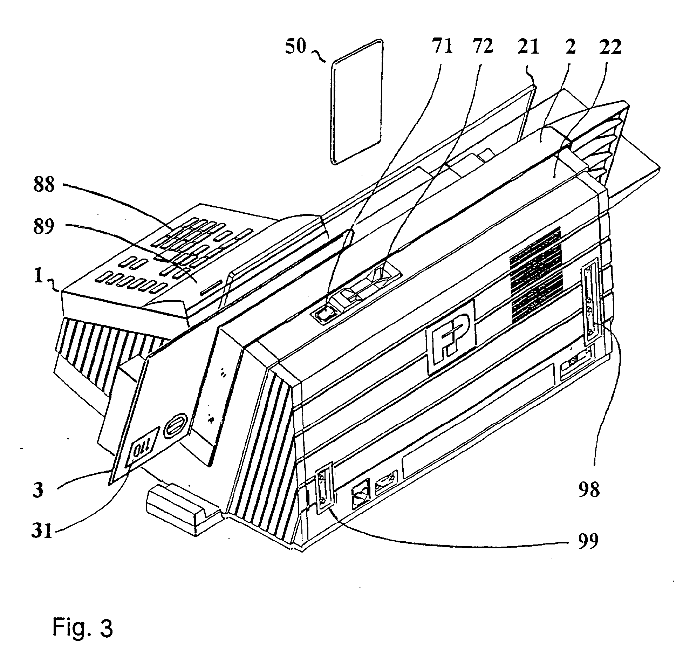

In der Figur 3 ist eine perspektivische Ansicht der Frankiermaschine von hinten dargestellt. Die Frankiermaschine ist mit einer Chipkarten-Schreib/Leseeinheit 70 ausgestattet, die hinter der Führungsplatte 2 angeordnet und von der Gehäuseoberkante 22 zugänglich ist. Nach dem Einschalten der Frankiermaschine mittels dem Schalter 71 wird eine Chipkarte 50 von oben nach unten in den Einsteckschlitz 72 eingesteckt und ist vom Benutzer für bestimmte Anwendungen programmierbar. Das erfolgt im Rahmen der von den Herstellern vorgegebenen Grenzen mit der Benutzerschnittstelle 88, 89 der Steuereinrichtung 1 des Meters. Die Folgekarten werden für vorbestimmte Funktionsanwendungen für die jeweilige Frankiermaschine vom Benutzer selbst eingerichtet. Zusätzlich können auch Chipkarten für vorbestimmte Funktionsanwendungen für die jeweiligen Peripheriegeräte der Frankiermaschine vom Benutzer selbst eingerichtet werden. Die Peripheriegeräte der Frankiermaschine sind an den Schnittstellen 98 und 99 elektrisch anschließbar und somit vom Meter entsprechend der Eingabe per Chipkarte ansteuerbar. Ein zugeführter auf der Kante stehender Brief 3, der mit seiner zu bedruckenden Oberfläche an der Führungsplatte anliegt, wird dann entsprechend der Eingabedaten mit einem Frankierstempel 31 bedruckt. Die Briefzuführöffnung wird durch eine Klarsichtplatte 21 und die Führungsplatte 2 seitlich begrenzt.

Mit dem Einstecken einer ersten Chipkarte 50, die mit der Frankiermaschine zusammen ausgeliefert worden ist, wird eine vorbestimmte Kostenstelle eingestellt. Beispielsweise wird die Kostenstelle 1 voreingestellt, auf welche die Buchung erfolgt, wenn per Tastatur keine anderen vorbestimmten Eingaben getätigt werden, um den Zugriff auf andere Kostenstellen zu erlangen.

Die Frankiermaschine enthält in ihrem Programmspeicher 92 ein entsprechendes Anwendungsprogramm, so daß eine in die Chipkarten-Schreib/Leseeinheit 70 eingesteckte erste Chipkarte 50 eine Einstellung der Frankiermaschine für mindestens eine Funktionsanwendung auf der höchsten Hierarchieebene gestattet.

Erfindungsgemäß ist vorgesehen, daß die Steuereinrichtung 1 ein mit einem Mikroprozessor 91 mit zugehörigen Speichern 92, 93, 94, 95 ausgestattetes Steuergerät 90 und eine angeschlossene Benutzerschnittstelle 88, 89 aufweist, die in Abhängigkeit von einer vorbestimmten Eingabe eine Frankiermaschinen-interne Initialisierung von mindestens einer nachfolgend in den Einsteckschlitz 72 eingesteckten Chipkarte aus einer Anzahl von weiteren Chipkarten 51, 52, 53 durch den Benutzer gestattet, wobei der Mikroprozessor 91 der Frankiermaschine programmiert ist, Daten in einen Teil des Kennungsstrings einer Chipkarte einzuschreiben, um die Chipkarten-Nummer mindestens zu ergänzen. In Verbindung mit geeignet initialisierten Chipkarten wird die Funktionseingabe und das Aufrufen der Anwendungsfunktion, beispielsweise die Verwaltung von zu buchenden Kostenstellendaten, vereinfacht. Die vorgenannten weiteren Chipkarten 51, 52, 53 werden sequentiell in einen Einsteckschlitz 72 der Chipkarten-Schreib/Leseeinheit 70 eingesteckt und Frankiermaschinen-intern initialisiert, wobei unter Verwendung der Tastatur 88 und Anzeige 89 und mit Hilfe des Mikroprozessors 91 und der zugehörigen nichtflüchtigen Speicher innerhalb der Frankiermaschine eine Tabelle mit einer speziellen hierarchischen Struktur erstellt wird, indem die vorgespeicherte Struktur entsprechend modifiziert und einer jeweiligen Chipkartennummer zugeordnet in einem der zugehörigen nichtflüchtigen Speicher 94, 95 gespeichert wird, wobei die Chipkartennummer in einem dafür vorgesehenen Teil eines in den geschützten Speicherbereichen der weiteren Chipkarten 51, 52, 53 gespeicherten Kennungsstrings gespeichert wird. Eine kostengünstige Chipkarte mit nur geringen Speicherplatz wird nachfolgend mit Typ a bezeichnet. Nach IS07816 kann eine Speicherkarte mit 256 Byte, wie z.B. OMC240SP von der Firma Orga, verwendet werden.

Eine andere Chipkarte mit viel Speicherplatz wird nachfolgend mit Typ b bezeichnet. Beispielsweise kann eine I$^2$CBus Speicherkarte mit 32 Kbyte nach ISO7816, insbesondere AM2C256 von der Firma AMMI, verwendet werden. Diese enthält einen Chip AT24C256 von der Firma Atmel.

Weitere Chipkarten werden nachfolgend mit Typ n bezeichnet. Beispielsweise kann eine einen Mikroprozessor aufweisende Chipkarte mit 8 Kbyte verwendet werden. Die weiteren Chipkarten der Typen b bis n betreffen beispielsweise folgende Funktionsanwendungen:

* Nachlade-Möglichkeit der Portogebührentabellen über Chipkarte 49,
* Klischee-Nachladen über Chipkarten (einzeln oder im Block),
* Stempelbilder-Nachladen über Chipkarten (Tagesstempel),
* Chipkarten mit zeitlimitierter Funktionenanwendung,
* Chipkarten mit PIN-Autorisierung von Funktionen,
* Chipkarten zur Einstellung der Peripheriegerätefunktion,
* Chipkarten zur Einstellung der Systemkonfigurierung,
* Chipkarten zur Aktivierung programmierter Druckbilder.

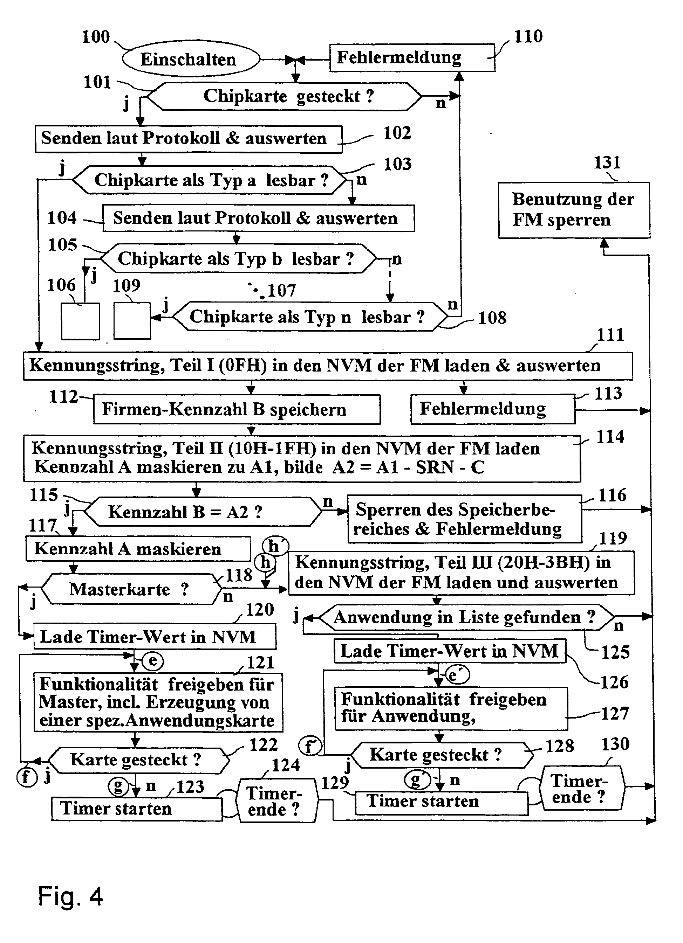

In der Figur 4 ist ein Ablaufplan für eine Steuerung durch den Mikroprozessor der Frankiermaschine bei der Dateneingabe mittels einer Chipkarte dargestellt. Nach einem Einschalten eines - nicht dargestellten - Netzteiles der Frankiermaschine mit dem Schalter 71, was im Schritt 100 vom Mikroprozessor 91 der Frankiermaschine registriert wird, signalisiert ein mit einer Kontaktiereinrichtung 74 der Chipkarten-Schreib/Leseeinheit 70 verbundener Mikroprozessor 75 dem Mikroprozessor 91 der Frankiermaschine, wenn eine Chipkarte in den Einsteckschlitz 72 eingesteckt ist, was im Schritt 101 vom Mikroprozessor 91 der Frankiermaschine registriert wird. Zwischen der Chipkarten-Schreib/ Leseeinheit 70 und der Chipkarte erfolgt dann eine Kommunikation nach einem ersten vorbestimmten Protokoll und eine Auswertung im Schritt 102, ob die Chipkarte als Typ a lesbar ist. Ist das der Fall, wird vom Abfrageschritt 103 auf einen Schritt 111 verzweigt, um einen Teil I des Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird. Wenn aber die Chipkarte als Typ a nicht lesbar ist, wird vom Abfrageschritt 103 auf einen Schritt 104 verzweigt, um eine Kommunikation nach einem zweiten vorbestimmten Protokoll und eine Auswertung im Schritt 104, ob die Chipkarte als Typ b lesbar ist vorzunehmen. Ist also die Chipkarte als Typ b lesbar, wird vom Abfrageschritt 105 zur weiteren Datenverarbeitung durch den Mikroprozessor 91 der Frankiermaschine auf einen Schritt 106 verzweigt. In vergleichbarer Weise werden gegebenenfalls weitere Protokolle durchlaufen (nicht gezeigte Schritte 107), zur Feststellung im Abfrageschritt 108, ob die Chipkarte als Typ n lesbar ist, um dann zur weiteren Datenverarbeitung durch den Mikroprozessor 91 der Frankiermaschine auf einen entsprechenden Schritt 109 zu verzweigen. Anderenfalls, wenn der Typ der Chipkarte nicht erkannt wird, erfolgt nach einer Fehlermeldung im Schritt 110 eine Rückverzweigung auf den Schritt 101.

Im Unterschied zum US 5,490,077, wo die Reihenfolge festliegt und eine Chipkarte A zum Portogebührentabellenladen vor einer Chipkarte B gesteckt werden soll, welche beispielsweise eine Kostenstelle einstellt, ist die Reihenfolge für das sequentielle Einstecken einer Reihe von Frankiermaschinen-intern initialisierten Chipkarten beliebig. Zusätzlich kann sich gemäß dem erfindungsgemäßen Ablaufplan nach Fig.4 der Chipkarten-Typ unterscheiden. In vorteilhafter Weise wird ein entsprechend der Anwendungsart geeigneter Chipkarten-Typ gewählt.

Ein teurer Chipkarten-Typ muß nur in den besonderen Fällen eingesetzt werden, wo keine Alternative besteht.

Es gibt beim US 5,490,077 keine Masterkarte, d.h. die Chipkarten sind alle technisch und funktionell gleich. Eine Zuordnung der 5-stelligen Kostenstellennummer KST-Nr. zum Funktionsumfang der Frankiermaschine ist nur dem Hersteller möglich. Im Unterschied dazu ist es erfindungsgemäß nun auch dem Benutzer möglich, eine freie Zuordnung von drei Stellen der 5-stelligen KST-Nummer zu mindestens einer der Anwendungsfunktionen Frankiermaschinen-intern zu speichern.

Ein Zeitfenster für das Einstecken jeder Chipkarte ist beim US 5,490,077 eine unveränderliche feste Zeitperiode. Erfindungsgemäß ist nun jedoch für das erste Einstecken der Chipkarte kein Zeitlimit vorgegeben. In vorteilhafter Weise wird in einer dem Kennungsstring der Chipkarten entsprechenden Anwendungsart ein Timer-Wert in einen Bereich der nichtflüchtigen Speicher 94 oder 95 der Frankiermaschine geladen, welcher einen Zähler ausbildet, der ein Zeitfenster für eine Nachfolgehandlung definiert, die beispielsweise mit einer Folge-Chipkarte ausgeführt wird.

Wenn vom Abfrageschritt 103 auf einen Schritt 111 verzweigt wird, um einen Teil I des Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird, kommt ein Chipkarten-Typ a zum Einsatz, bei welchen aus einer gespeicherten Firmen-Kennzahl B eine Information für den weiteren Betrieb der Frankiermaschine abgeleitet werden kann. Gegebenenfalls prüft der Mikroprozessor 91 die vorgenannte Firmen-Kennzahl B in bekannter Weise zusätzlich auf Vorliegen einer gültigen Firmen-ID. Anderenfalls wird im optionalen Schritt 113 eine Fehlermeldung abgegeben. Im Schritt 112 wird die Firmen-Kennzahl B in einem der nichtflüchtigen Speicherbereiche der Frankiermaschine gespeichert, um dann auf einen Schritt 114 zu verzweigen.

Im Schritt 114 wird ein Teil II des Kennungsstrings in den nichtflüchtigen Speicher 94 der Frankiermaschine geladen, wobei durch den Mikroprozessor 91 der Frankiermaschine eine Maskierung der Anfangs-Kennzahl A zur Ableitung einer ersten Kennzahl A1 erfolgt, mit welcher anschließend eine Rechenoperation zur Bildung einer zweiten Kennzahl A2 durchgeführt wird, um nachfolgend zu prüfen, ob der dem Kennungsstring entstammende erste Teil I und die Kennzahl A2 zueinander ein vorbestimmtes Verhältnis haben. Zur Bildung einer zweiten Kennzahl A2 erfolgt eine Rechenoperation der Form:

$$A2 = A1 - SRN - C \qquad\qquad (1)$$

mit der Serien-Nummer SRN der Frankiermaschine und mit einer geheimen Konstanten C.

Vom Mikroprozessor 91 der Frankiermaschine ist unter Verwendung der Firmenkennzahl B nachfolgend zu prüfen:

$$\text{Kennzahl B} = A2 \qquad\qquad (2)$$

In Auswertung der Gleichung (2) erfolgt bei mangelndem vorbestimmten Verhältnis ein Sperren des Speicherbereiches in der Frankiermaschine für vorbestimmte Anwendungen im Schritt 116 oder anderenfalls, beispielsweise falls die Firmen-Kennnummer (Firmen-ID) gleich der gebildeten zweiten Kennzahl A2 ist, wird auf einen Schritt 117 verzweigt. Nun kann eine weitere Maskierung der Kennzahl vorgenommen werden, um die Master-Karte zu identifizieren.

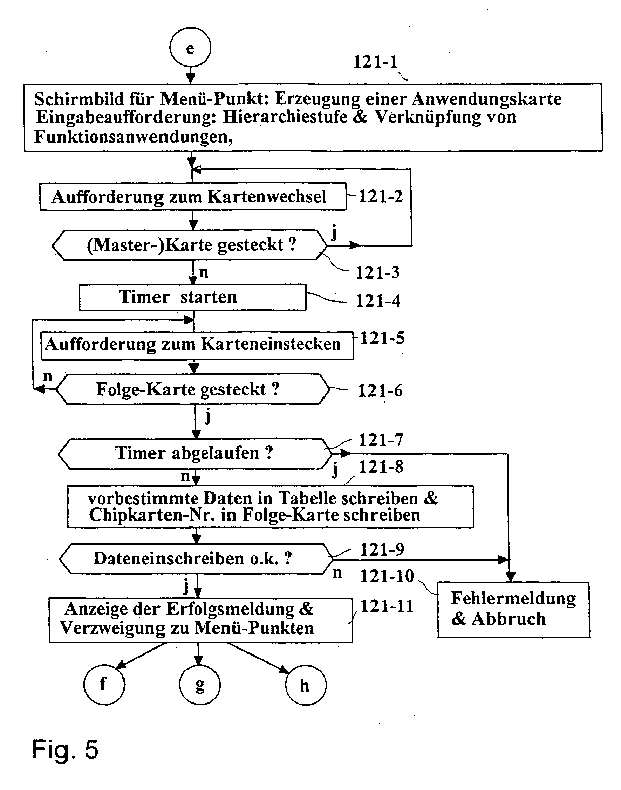

Im Abfrageschritt 118 wird geprüft, ob eine Master-Karte vorliegt. Ist das der Fall wird auf einen Schritt 120 verzweigt, um einen Timer-Wert in den nichtflüchtigen Speicher 94 der Frankiermaschine zu laden, wobei durch den Mikroprozessor 91 der Frankiermaschine im Schritt 121 die Funktionalität freigegeben wird, welche im Programmspeicher 92 der Frankiermaschine für die Master-Karte vorgesehen ist. Diese Funktionalität schließt eine Erzeugung einer speziellen Funktionenanwendungs-Karte mittels der Frankiermaschine ein, was anhand der Figur 5 nachfolgend näher erläutert wird. Dabei wird im Schritt 122 geprüft, ob die Karte noch immer gesteckt ist. Ist das der Fall ist die Funktionalität weiter freigegeben. Anderenfalls wird im Schritt 123 ein Timer gestartet. Der Timer ist beispielsweise ein mittels Speicherzellen im flüchtigen Speicher 93 oder in einem der nichtflüchtigen Speicher 94, 95 der Frankiermaschine realisierter Rückwärtszähler und der Oszillator im Uhren/DatumsSchaltkreis 95 liefert einen entsprechenden Takt. Bei Timerende wird zum Beispiel bei Erreichen des Zählwertes Null ein Interrupt für den Mikroprozessor 91 der Frankiermaschine ausgelöst. Im Folgeschritt 131 wird dann die weitere Benutzung der Frankiermaschine für mindestens die eine Funktionalität Frankieren gesperrt.

Wird im Abfrageschritt 118 festgestellt, daß keine Master-Karte vorliegt, wird auf einen Schritt 119 verzweigt, um den Teil III des Kennungsstringes in den nichtflüchtigen Speicher 94 oder 95 der Frankiermaschine zu laden und um eine Auswertung hinsichtlich der dort abstammenden Chipkartennummer vorzunehmen. Eine Anzahl von unterschiedlichen Anwendungsfunktionalitäten ist in den Speicherzellen eines Speicherbereiches des nichtflüchtigen Speichers 94 oder 95 der Frankiermaschine gelistet, wo jeder Anwendungsfunktionalität eine entsprechende Chipkartennummer zugeordnet ist. Ist in der Liste einer bestimmten Chipkartennummer keine Anwendung zugeordnet gespeichert, wird vom Abfrageschritt 125 auf den Folgeschritt 131 verzweigt, um die weitere Benutzung der Frankiermaschine für mindestens die eine Funktionalität Frankieren zu sperren. Anderenfalls wird im Schritt 123 ein Timer gestartet und im Schritt 127 wird die gelistete Funktionalität entsprechend der Chipkartennummer freigegeben. Im Schritt 128 wird geprüft, ob die Karte noch immer gesteckt ist. Ist das der Fall, erfolgt einer Rückverzweigung und die Funktionalität ist weiter freigegeben. Bei Timerende wird ein Interrupt für den Mikroprozessor 91 der Frankiermaschine ausgelöst und auf den Folgeschritt 131 verzweigt.

Der Kennungsstring hat eine schlüsselartige Funktion. Der Kennungsstring ist nichtflüchtig in der Chipkarte so gespeichert, daß mehrere Sicherheitsbereiche betroffen sind, wobei zur Veränderung des im jeweiligen Sicherheitsbereich gespeicherten Teils des Kennungsstrings unterschiedliche Sicherheitsanforderungen zu erfüllen sind. Nachdem durch die Hersteller der erste und zweite Teil des Kennungsstrings beschrieben wurde, kann ein Benutzer der Frankiermaschine mit selbiger den dritten Teil des Kennungsstrings mit einer Chipkartennummer beschreiben. Der Mikroprozessors 91 ist programmiert, eine in der Chipkarte gespeicherte Chipkartennummer zu verändern und eine Zuordnung der Chipkartennummer zu gelisteten Anwendungsfunktionen im nichtflüchtigen Speicher der Frankiermaschine abzuspeichern.

Es ist vorgesehen, daß der Mikroprozessor 91 des Steuergerätes 90 programmiert ist, um in Verbindung mit für den jeweiligen Anwendungszweck geeignet initialisierten Chipkarten die Funktionseingabe und eine Anwendungsfunktion, beispielsweise die Verwaltung von zu buchenden Kostenstellendaten zu vereinfachen. Die Funktionseingabe schließt u.a. die top-down-Initialisierung von weiteren Chipkarten ein.

Erfindungsgemäß wird der Kennungsstring in der Frankiermaschine ausgehend von der höchsten Sicherheitsstufe abwärts geprüft und erschließt alle anwendungsspezifisch erforderlichen Speicherbereiche im nichtflüchtigen Speicher der Frankiermaschine. Eine erkannte Lücke im Kennungsstring erzeugt eine Fehlermeldung und hat eine Sperrung des betreffenden Speicherbereiches im nichtflüchtigen Speicher der Frankiermaschine und/oder der Chipkarte zur Folge.

Die Chipkarten-Schreib/Leseeinheit 70 besteht aus einem zugehörigen mechanischer Träger für die Mikroprozessorkarte und Kontaktiereinheit 74. Letztere gestattet eine sichere mechanische Halterung der Chipkarte in Lese-Position und eindeutige Signalisierung des Erreichens der Leseposition der Chipkarte in der Kontaktierungseinheit, beispielsweise nach dem Push/Push-Prinzip taktil durch Druckpunkt signalisiert, Eject-Taste oder Display/Beeper-Meldung der Frankiermaschine, eine zuverlässige elektrische Kontaktierung von kontaktbehafteten Chipkarten gemäß ISO 7816 für mindestens 100.000 Kontaktierungszyklen sowie eine leichte Benutzbarkeit beim Stecken und Ziehen der Chipkarte. Die Mikroprozessorkarte mit dem Mikroprozessor 75 besitzt eine einprogrammierte Lesefähigkeit für alle Art von Speicherkarten, sowie für Chipkarten mit und ohne PIN-Codierung. Eine Ver- oder Entschlüsselung für Sicherheitsalgorithmen (z. B. RSA, DES) ist nicht erforderlich. Das Interface zur FM ist eine serielle Schnittstelle gemäß RS232-Standard. Die Daten-Übertragungsrate beträgt min. 1,2 K Baud. Eine Selbsttestfunktion mit Bereitschaftsmeldung ist ausführbar bzw. wird nach Einschalten der Stromversorgung mittels Schalter 71 selbsttätig ausgeführt. Die in den Einsteckschlitz 72 eingesteckte Masterkarte 50 erteilt mindestens eine Zugangsberechtigung zur Gesamt-Kostenstelle, d. h. alle ausgegebenen Master-Chipkarten greifen nur auf diese Kostenstelle zu. Danach existiert die Wahlmöglichkeit einer anderen Kostenstelle über Tastatur. Unter anderem sind Master-Chipkarten zur erfindungsgemäßen Definition der Chipkarten/Kostenstellen-Beziehung und zum Freigabe/Sperren von Karten vorgesehen. Es kann zur Erweiterung des Funktionsumfanges eine Zugriffsmöglichkeit auf definierte Kostenstellen über die Folgekarten mittels der Frankiermaschine geschaffen werden, wobei eine Speicherung der Zuordnung entsprechend einer beliebigen Hierarchie möglich ist.

Die Chipkarten vom Typ a sind für alle Funktionenanwendungen Zugang/Kostenstellenhandling geeignet. Jede Frankiermaschine mit Chipkartenleser wird mindestens mit einer Masterkarte ausgeliefert. Zweite und weitere ausgelieferte Karten ist eine sogenannte Folgekarte. Jede dieser Karten hat bei Auslieferung eine noch nicht endgültige bzw. unvollständige Chipkarten-Nummer. Jedoch nach ihrer Frankiermaschinen-internen Initialisierung haben sie eine laufende Chipkarten-Nummer, die eine eindeutige Kennung für jede Chipkarte ist. Nur im ausgelieferten Zustand sind die Chipkarten noch nicht bestimmten Frankiermaschinen zugeordnet. Die neu in Betrieb zu nehmende Frankiermaschine soll vorzugsweise selbsttätig die erste gesteckte Chipkarte als Masterkarte werten und eine entsprechende Chipkartennummer in ihren Speichern hinterlegen. Die Zuordnung der Funktionalität jeder existierenden bzw. nachgelieferten Karte geschieht frankiermaschinen-intern über eine Tabelle. Die Funktionalität der Masterkarte ist wie folgt definiert:

a) Als Voreinstellung wird die Kostenstellen KST 1 angewählt, dieser Voreinstell-Wert ist änderbar.
b) Es ist manuell möglich, Kostenstellen KST einzurichten, zu löschen und anzuwählen.
c) Es ist möglich Folgekarten bestimmten Kostenstellen KST zuzuordnen, Zuordnungen zu ändern oder zu löschen.
d) Alle verfügbaren KST-Verknüpfungsbedingungen sind definierbar, bzw. die Tabelle ist entsprechend einer Verknüpfung mit EingabeDaten auszufüllen.
e) Zugriff auf die volle Funktionalität der Frankiermaschine.

Die Funktionalität der Folgekarte ist wie folgt definiert:

a) Automatisches Anwählen einer festgelegten Kostenstelle KST oder KST-Gruppe mit deren Verknüpfungsbedingungen (Werbeklischee-Nr., evtl. mit Wertbegrenzung je Zeiteinheit, etc.)
b) KostenstellenlWerbeklischee-Zuordnungen setzen, ändern oder löschen. Freie Wahl aller in der Frankiermaschine vorhandenen Klischees.
c) Funktion "Folgekarten-Duplizieren".

Die Sicherheit in punkto Karten-Kopierschutz wird durch hersteller- und anwenderspezifische Informationen in einem schreibgeschützten Bereich der Karte gewährleistet.

Die Chipkarten sind herstellerseitig mit einer FP-spezifischen Kennzahl B im schreibgeschützten Teil II des Kennungsstrings versehen. Zusätzlich wird seitens der Frankiermaschine bei Erst-Autorisierung die Kennzahl A schreibgeschützt gespeichert, die sich aus der Seriennummer der Frankiermaschine, beispielsweise 505010, und einer angehängten beispielsweise 3-stelligen fortlaufenden Zahl, beispielsweise 001, zusammensetzt. Die Personalisierung ergibt sich bereits aus der Seriennummer der Frankiermaschine und der angehängten 3-stelligen Zahl, beispielsweise 505010 001. Diese Personalisierung kann für die Masterkarte beim Hersteller erfolgen.

In einer bevorzugten Ausführungsform der Erfindung erfolgt selbst die endgültige Personalisierung der Masterkarte beim Benutzer, indem mittels der Frankiermaschine die 3-stelligen Zahl 001 angehängt wird. Zwar wird zwischen Masterkarte und Folgekarten unterschieden, jedoch besteht der Unterschied nur darin, daß die Masterkarte die Erste von der Frankiermaschine autorisierte Karte ist und automatisch die Zahl 001 erhält. Ansonsten ist die Struktur des Karteninhalts identisch.

Die Frankiermaschine Jet Mail® ist in der Lage, selbsttätig Chipkarten zur Benutzung an ihr zu autorisieren. Dies geschieht aus einem dafür vorgesehenen Kostenstellen-Menü-Unterpunkt heraus, indem nach dem Stecken der Masterkarte und Anwahl der Autorisierungsfunktion eine beliebige Folgekarte einer vorhandenen oder neu definierten Kostenstelle oder Gruppe zugeordnet wird. Dazu wird die entsprechende Folgekarte gesteckt und seitens der Frankiermaschine mit einer Kennzahl A beschrieben. Bei Benutzung der Chipkarte werden beide Kennzahlen (A und B) aus der Chipkarte in die Frankiermaschine geladen und dort nach einer Rechenoperation miteinander verglichen. Beispielsweise bei Gleichheit erfolgt die Auswertung der ausgeblendeten letzten 3 Stellen der Kennzahl A über eine Tabelle u.a. bezüglich, welcher Kostenstellennummer diese Karte zugeordnet ist. Der erste Eintrag in der Tabelle erfolgt für die Masterkarte. Die Frankiermaschine ist ohne eine eingesteckte, die vorgenannte Autorisierungsfunktion aufweisende, Masterkarte gesperrt. In der Frankiermaschine liegt für den ersten Ast gemäß Figur 1b beispielsweise folgende Tabelle vor:

| Karten-Nr. | KST-Nr. | Timer-Wert | Werbe-Klischee | Wertgrenze | aktueller Rest-Wert |
|---|---|---|---|---|---|
| 1234567801 | 1-50 | 20 sec | Nein | R3.x = 5000,- | R1.x = 99,- |
| 1234567802 | 1-4 | 10 sec | 1 | R3.y =2000,- | R1.y = 255,- |
| 1234567803 | 1 | 2 sec | 1 | R3.1 =1000,- | R1.1 = 99,- |
| 1234567804 | 3 | 2 sec | Nein | R3.3 =1000,- | R1.3 = 10,- |
| 1234567805 | 4 | 2 sec | 5 | R3.4 =3000,- | R1.4 = 2005,- |

Tabelle fortgesetzt

| Karten-Nr. | KST-Nr. | Timer-Wert | Werbe-Klischee | Wertgrenze | aktueller Rest-Wert |
|---|---|---|---|---|---|
| 1234567806 | 2 | 1 sec | Nein | R3.2 = 0,- | R1.2 = 0,- |

Der Kunde hat die Möglichkeit, sich die Chipkarte vom Typ a mit der aktuellen Kostenstellennummer zu beschriften. Änderungen von Zuordnungen zwischen Chipkarten und Kostenstellennummern sind nur über die Masterkarte möglich. Damit sind bestimmte Menüpunkte im Kostenstellenmenü nur mit gesteckter Masterkarte freigegeben. Weiterhin sind auch bestimmte Verknüpfungsbedingungen für die Kostenstellen beispielsweise bezüglich Werbeklischee-Nr., Wertbegrenzung je Zeiteinheit analog änderbar. Auf Ungleichheit bzw. unbekannte, ungültige Karten wird seitens der Frankiermaschine mit einer entsprechenden Fehlermeldung reagiert. Durch die Funktion " Folgekarten-Duplizieren" ist die Frankiermaschine Jet Mail® weiterhin in der Lage, selbsttätig mit Hilfe der Masterkarte Folgekarten zur Benutzung an ihr zu autorisieren. Dazu wird die entsprechende Folgekarte gesteckt und seitens der Frankiermaschine mit der Kennzahl A beschrieben. Für jede Kostenstelle KST kann eine zeitlich begrenzt gültige jedoch (monatlich) erneuerbare Wertgrenze für den Verbrauch an Frankierwerten je Kalendermonat mit Hilfe der Masterkarte festgelegt werden. Für jede Kostenstelle KST ist maximal das gesamte in der Frankiermaschine Jet Mail® vorhandene Guthaben verfügbar. Mit Beginn eines neuen Kalendermonats wird die vorbestimmte Wertgrenze übernommen, es gibt keine Überträge. Änderungen von Zuordnungen zwischen Chipkarten und Kostenstellen sowie den ggf. korrellierenden Wertbegrenzungen sind nur mit Hilfe der Masterkarte möglich.

Die Bedienoberfläche der Frankiermaschine ist jederzeit komplett vorhanden, jedoch wird bei Anwahl der für die Masterkarte reservierten Punkte, bei nicht gesteckter Masterkarte, dieselbe als Autorisierung verlangt. Die anzeigbare Tabelle zur Verwaltung der Chipkarten-Funktionalität kann beispielsweise die Felder: Chipkarten-Nr. / KST-Nr. / Timer-Wert / Werbeklischee-Zuordnung / Wertgrenze / aktueller Rest-Wert enthalten. Für sogenannte Gruppenkarten ist es grundsätzlich möglich, daß auch Gruppen an x Kostenstellen einer Karten-Nummer zugeordnet werden.

Die Figur 5 zeigt einen Ablaufplan für eine Steuerung durch den Mikroprozessor bei der Intialisierung der von der ersten Chipkarte abgeleiteten zweiten Chipkarten bzw. weiterer Folgekarten, welcher in die Figur 4 entsprechend den Punkten e, f, g, h eingebunden ist. Wird der Ablaufplan im Rahmen des Schrittes 121 gemäß Figur 4 abgearbeitet und dabei im Subschritt 121-1 die Funktion "Folgekarten-Duplizieren" aufgerufen, erscheint in der Anzeige 89 ein entsprechendes Schirmbild für den MENÜ-Punkt: Erzeugung einer Anwendungskarte und eine Eingabeaufforderung. Letztere betrifft die Eingabe der Hierarchiestufe und der gewünschten Verknüpfung von Funktionsanwendungen, welche per Tastatur 88 in vorbestimmter Weise, gegebenenfalls mit Menüunterstützung bzw. Bedienerführung einzugeben ist. Nach der letzten Eingabe, welche vorzugsweise durch ein Quittieren per ENTER-Taste abgeschlossen wird, wird zum Subschritt 121-2 verzweigt. Im Subschritt 121-2 erscheint in der Anzeige 89 eine Aufforderung zum Kartenwechsel. Nun wird vom Mikroprozessor 91 im nachfolgenden Subschritt 121-3 geprüft, ob die Masterkarte 50 noch gesteckt ist. In einem derartigem Fall ist ein Kartenwechsel noch nicht vollzogen worden und es wird zwecks Weiteranzeige der o.g. Aufforderung zum Subschritt 121-1 zurückverzweigt. Nach Durchführung des Kartenwechsels und der Prüfung im Subschritt 121-3 wird der Subschritt 121-4 erreicht, um einen Timer zu starten. Der Timer ist vorzugsweise ein Rückwärtszähler, welcher auf einen wählbaren Wert, zum Beispiels 20 sec, voreingestellt ist, der bei Entfernen der Masterkarte gestartet und dann bis Null herunter gezählt wird. Innerhalb dieser Zeit erscheint in der Anzeige 89 eine Aufforderung zum Karteneinstecken (Subschritt 121-5) und nachfolgend im Subschritt 121-6 eine Prüfung, ob eine Folgekarte (51, 52, 53) in die Chipkarten-Schreib/Leseeinheit 70 gesteckt wurde. Ist das nicht der Fall, dann wird auf den Subschritt 121-5 zurückverzweigt. Anderenfalls wird ein Abfrage im Subschritt 121-7 durchgeführt, ob der Timer abgelaufen ist. Ist das der Fall, dann wird auf den Subschritt 121-10 verzweigt und in der Anzeige 89 erscheint eine Fehlermeldung. Das Anwendungsprogramm wird dann abgebrochen. Ist anderenfalls der Timer noch nicht abgelaufen, wird auf einen Subschritt 121-8 verzweigt, um die vorbestimmten Daten in einen Speicherbereich tabellarisch einer Chipkartennummer zuordenbar einzuschreiben und um die editierte Chipkartennummer in die Folgekarte einzuschreiben. Die vorbestimmten Daten einschließlich der Chipkartennummer wurden entsprechend gemäß des ersten Schrittes 121-1 ausgewählt bzw. editiert.

Im Fall von anderen Anwendungen der Master-Karte wird durch den Mikroprozessor 91 der Frankiermaschine im Schritt 121 die Funktionalität freigegeben, welche im Programmspeicher 92 der Frankiermaschine für die Master-Karte vorgesehen ist. Diese Funktionalität schließt eine Erzeugung einer speziellen Funktionenanwendungs-Karte mittels der Frankiermaschine ein, wobei die Erzeugung einerseits durch Editierung eines Teils der Chipkartennummer und andererseits durch das frankiermaschineninterne tabellarische Einspeichern hierarchisch geordnet werden kann.

Wurde das vorgenannte Dateneinschreiben im Subschritt 121-8 erfolgreich beendet, dann wird im Subschritt 121-9 die Vollständigkeit festgestellt und in der Anzeige 89 erscheint im nachfolgenden Subschritt 121-11 die Anzeige der Erfolgsmeldung mit anschließender Verzweigung zu Menü-Punkten für andere Funktionsanwendungen. War das Dateneinschreiben jedoch nicht erfolgreich oder unvollständig, dann wird wieder auf den Subschritt 121-10 verzweigt, in der Anzeige 89 erscheint eine Fehlermeldung und das Anwendungsprogramm wird dann abgebrochen.

Eine zweite Variante einer Frankiermaschinen-internen Initialisierung einer weiteren Folgekarte mit der zweiten Chipkarte ergibt sich aus dem Schritt 127 der Figur 4 in Kombination mit einem entsprechend modifizierten Ablaufplan ähnlich Figur 5, wobei die Bezeichnung 121- durch die Bezeichnung 127- ersetzt ist und der Ablaufplan in die Figur 4 entsprechend den Punkten e', f', g', h' eingebunden ist.

**Patentansprüche**

1. Frankiermaschine mit einer Chipkarten-Schreib/Leseeinheit (70) und mit einer Druckeinrichtung (20), welche von einer Steuereinrichtung (1) gesteuert wird, wobei eine in einen Einsteckschlitz (72) der Chipkarten-Schreib/Leseeinheit (70) eingesteckte erste Chipkarte (50) eine Einstellung der Frankiermaschine für mindestens eine Funktionsanwendung gestattet, wobei die zugehörige Steuereinrichtung (1) ein mit einem Mikroprozessor (91) mit zugehörigen Speichern (92, 93, 94, 95) ausgestattetes Steuergerät (90) und eine angeschlossene Benutzerschnittstelle (88, 89) aufweist, **gekennzeichnet dadurch,**

   **daß** die Benutzerschnittstelle (88, 89) in Abhängigkeit von einer vorbestimmten Eingabe eine Frankiermaschinen-interne Initialisierung von mindestens einer nachfolgend in den Einsteckschlitz (72) eingesteckten Chipkarte aus einer Anzahl von weiteren Chipkarten (51, 52, 53) durch den Benutzer gestattet, wobei der Mikroprozessor (91) der Frankiermaschine programmiert ist, Daten in einen Teil des Kennungsstrings einer Chipkarte einzuschreiben, um die Chipkartennummer mindestens zu ergänzen,

   **daß** der Mikroprozessor (91) zur Ableitung von Chipkarten (51, 52, 53) mit einem eingeschränkten Funktionsumfang derart programmiert ist, eine in der jeweiligen Chipkarte (51, 52, 53) gespeicherte Chipkartennummer zu verändern und eine Zuordnung der Chipkartennummer zu gelisteten Anwendungsfunktionen im nichtflüchtigen Speicher (94, 95) der Frankiermaschine abzuspeichern.

2. Frankiermaschine, nach Anspruch 1, **gekennzeichnet dadurch, daß** der Mikroprozessor (91) des Steuergerätes (90) programmiert ist, um in Verbindung mit für den jeweiligen Anwendungszweck initialisierten Chipkarten die Funktionseingabe und das Aufrufen der Anwendungsfunktion zu vereinfachen, wobei die Funktionseingabe die top-down Initialisierung von weiteren Chipkarten einschließt.

3. Frankiermaschine, nach Anspruch 2, **gekennzeichnet dadurch, daß** eine Anwendungsfunktion die Verwaltung von zu buchenden Kostenstellendaten einschließt.

4. Frankiermaschine, nach den Ansprüchen 1 bis 2, **gekennzeichnet dadurch, dass** im nichtflüchtigen Speicher (94, 95) der Frankiermaschine eine einer jeweiligen Chipkartennummer zugeordnete Tabelle mit einer speziellen hierarchischen Struktur nichtflüchtig gespeichert vorliegt, wobei die Tabelle erstellt wird, indem eine vorgespeicherte Struktur entsprechend modifiziert wird, wobei das Modifizieren erfolgt, indem eine Zuordnung zu Anwendungsfunktionen der Frankiermaschine geschaffen wird und wobei die Tabelle im Ergebnis einer top-down-Initialisierung die spezielle hierarchische Struktur aufweist.

5. Frankiermaschine, nach Anspruch 4, **gekennzeichnet dadurch, dass** die Tabelle im Ergebnis der top-down-Initialisierung eine hierarchische Struktur aufweist, welche durch die Reihenfolge der Auflistung der Chipkartennummern und durch die Zuordnung von gelisteten Anwendungsfunktionen gegeben ist, die im nichtflüchtigen Speicher (94, 95) der Frankiermaschine nichtflüchtig gespeichert vorliegt.

6. Frankiermaschine, nach Anspruch 1, **gekennzeichnet dadurch, daß** der Einsteckschlitz (72) der Chipkarten-Schreib/Leseeinheit (70) hinter der Führungsplatte (2) angeordnet und von der Gehäuseoberkante (22) der Frankiermaschine zugänglich ist, um die vorgenannten weiteren Chipkarten (51, 52, 53) sequentiell in den Einsteckschlitz (72) der Chipkarten-Schreib/Leseeinheit (70) einzustecken und zu initialisieren zu können, wobei der Mikroprozessors (91) des Steuergerätes (90) zur top-down-Initialisierung von Chipkarten programmiert ist, wobei unter Verwendung der Tastatur (88) und Anzeige (89) und mit Hilfe des Mikroprozessors (91) und der zugehörigen nichtflüchtigen Speicher innerhalb der Frankiermaschine eine Tabelle mit einer speziellen hierarchischen Struktur erstellt wird, indem die vorgespeicherte Struktur entsprechend modifiziert und einer jeweiligen Chipkartennummer zugeordnet in einem der zugehörigen nichtflüchtigen Speicher (94, 95) gespeichert wird, wobei die Chipkartennummer in einem dafür vorgesehenen Teil eines in den geschützten Speicherbereichen der weiteren Chipkarte (51, 52, 53) gespeicherten Kennungsstrings gespeichert wird.

**Claims**

1. A franking machine with a chip card read-write unit (70) and a printing device (20) that is controlled by a control unit (1), wherein a first chip card (50) inserted in a plug-in slot (72) of the chip card read-write unit (70) allows for a setting of the franking machine for at least one functional application, wherein the appertaining control unit (1) comprises a control device (90) equipped with a microprocessor (91) with related memory units (92, 93, 94, 95) and a user interface (88, 89) connected therewith, **characterized in**
that the user interface (88, 89), depending on a pre-defined input, allows for an internal initialization in the franking machine of at least one chip card out of a number of further chip cards (51, 52, 53) subsequently inserted in the plug-in slot (72) by the user, wherein the microprocessor (91) of the franking machine is programmed for writing data into a part of the identification string of a chip card for at least supplementing the chip-card number;
that the microprocessor (91) is programmed for a derivation of chip cards (51, 52, 53) having a restricted functional scope in such a manner that a chip-card number stored in the respective chip card (51, 52, 53) is altered and an assignment of the chip-card number to enlisted application functions is stored in the non-volatile memory (94, 95) of the franking machine.

2. A franking machine according to Claim 1, **characterized in that** the microprocessor (91) of the control device (90) is programmed for simplifying the function input and the calling of application functions in connection with the chip cards initialized for the respective application purpose, wherein the function input includes the top-down initialization of further chip cards.

3. A franking machine according to Claim 2, **characterized in that** an application function includes the administration of cost-center data to be entered in the books.

4. A franking machine according to Claims 1 to 2, **characterized in that** a table with a specific hierarchical structure assigned to a respective chip-card number is stored in a non-volatile manner in the non-volatile memory (94, 95) of the franking machine, wherein said table is created by accordingly modifying a pre-stored structure, said modification being done by creating an assignment to application functions of the franking machine, and wherein, as a result of a top-down initialization, the table has the specific hierarchical structure.

5. A franking machine according to Claim 4, **characterized in that,** as a result of the top-down initialization, the table has the specific hierarchical structure that is defined by the order of the listing of the chip-card numbers and by the assignment of listed application functions that are available stored in a non-volatile manner in the non-volatile memory (94, 95) of the franking machine.

6. A franking machine according to Claim 1, **characterized in that** the plug-in slot (72) of the chip card read-write unit (70) is arranged behind the guide plate (2) and is accessible from the upper edge of the housing of (22) of the franking machine for sequentially inserting the aforementioned further chip cards (51, 52, 53) into the plug-in slot (72) of the chip card read-write unit (70) and initializing them, the microprocessor (91) of the control device (90) being programmed for a top-down initialization of chip cards, wherein, by means of the keyboard (88) and the display (89) and with the help of the microprocessor (91) and of the related non-volatile memory means, a table with a specific hierarchical structure is created in the franking machine by respectively modifying the pre-stored structure and storing it assigned to a respective chip-card number in one of the related non-volatile memory means (94, 95), wherein the chip-card number is stored in a respectively dedicated part of the identification string stored in the protected memory areas of the further chip cards (51, 52, 53).

**Revendications**

1. Machine à affranchir le courrier avec une unité d'écriture / de lecture de carte à puce (70) et avec un dispositif d'impression (20), lequel est commandé au dispositif de commande (1), tandis qu'une première carte à puce (50), introduite dans une fente d'entrée (72) de l'unité d'écriture / de lecture de carte à puce (70), permet un réglage de la machine à affranchir le courrier pour au moins une utilisation des fonctions, tandis que le dispositif de commande (1) s'y attenant présente un appareil de commande (90) équipé d'un microprocesseur (91) avec des mémoires attenantes (92, 93, 94, 95) et, une interface utilisateur connectée (88, 89), **caractérisée en ce que**, l'interface utilisateur (88, 89) permet, en fonction d'une entrée préfixée, une inisialisation interne de l'affranchisseuse par l'utilisateur d'au moins une carte à puce introduite dans la fente d'entrée (72) des différentes cartes suivantes (51, 52, 53), tandis que le microprocesseur (91) de la machine à affranchir le courrier est programmé pour inscrire des données dans une partie de la chaîne de caractères d'indicatif d'une carte à puce, afin de compléter pour le moins le numéro de la carte à puce,

**en ce que** le microprocesseur (91) est programmé pour la dérivation des cartes à puce (51, 52, 53) avec un périmètre réduit des fonctions, afin de changer un numéro de carte à puce enregistré dans les différentes cartes à puce (51, 52, 53) et, afin de stocker un classement des numéros de cartes à puce aux fonctions d'applications listées dans une mémoire non volatile (94, 95) de l'affranchisseuse.

2. Machine à affranchir le courrier, selon la spécification 1, **caractérisée en ce que**, le microprocesseur (91) de l'appareil de commande (90) est programmé, afin de simplifier l'entrée des fonctions et l'appel de la fonction d'application en connexion avec les cartes à puce initialisées pour les usages d'application du moment, tandis que l'entrée des fonctions comprend l'initialisation de haut en bas d'autres cartes à puce.

3. Machine à affranchir le courrier, selon la spécification 2, **caractérisée en ce qu'**une fonction d'application comprend la gestion de données de l'unité des coûts à comptabiliser.

4. Machine à affranchir le courrier, selon les spécifications de 1 à 2, **caractérisée en ce que**, dans la mémoire non volatile (94, 95) de l'affranchisseuse, un tableau classé dans un numéro de carte à puce du moment est mémorisé de manière non volatile avec une structure spéciale hierarchisée, tandis que le tableau est établi, pendant qu'une stucture préenregistrée est modifiée en conséquence, tandis que la modification s'effectue, pendant qu'un classement est mis en place pour des fonctions d'application de la machine à affranchir le courrier et, tandis que le tableau présente la structure spéciale hiérarchisée, en résultat d'une initialisation de haut en bas.

5. Machine à affranchir le courrier, selon la spécification 4, **caractérisée en ce qu'**un tableau présente une structure hiérarchisée, en résultat de l'initialisation de bas en haut, laquelle est donnée par l'ordre du listage des numéros de cartes à puce et par le classement des fonctions d'application listées, qui sont stockées dans les mémoires non volatiles (94, 95) de l'affranchisseuse de manière non volatile.

6. Machine à affranchir le courrier, selon la spécification 1, **caractérisée en ce que** la fente d'entrée (72) de l'unité d'écriture / de lecture de carte à puce (70) est disposée derrière la plaque de guidage (2) et, est accesssible du bord supérieur de la boîte (22) de l'affranchisseuse, afin d'effectuer un enfichage séquentiel des différentes cartes à puces susmentionnées (51, 52, 53) dans la fente d'entrée (72) de l'unité d'écriture / de lecture de carte à puce (70) et de pouvoir les initialiser, tandis que le microprocesseur (91) de l'appareil de commande (90) est programmé pour l'initialisation de haut en bas des cartes à puce, tandis qu'un tableau est constitué avec une structure spéciale hierarchisée via le clavier (88) et l'affichage (89) et à l'aide du microprocesseur (91) et de la mémoire non volatile s'y attenant à l'intérieur de l'affranchisseuse, pendant que la structure préenregistrée est modifiée en conséquence et classée dans numéro de carte à puce du moment enregistrée dans une des mémoires non volatiles s'y attenant (94, 95), tandis que le numéro de carte à puce est énregistré dans une partie d'une chaîne de caractères d'indicatif mémorisée prévue à cet effet dans les zones protégées de mémoire des autres cartes à puce (51, 52, 53).

Fig. 1a

Fig. 1b

Fig. 2

Fig. 3

**Fig. 4**

**Fig. 5**